# EUROPEAN PATENT APPLICATION

(11) **EP 4 397 730 A1**
(43) Date of publication of application: **10.07.2024**
(21) Application number: 20962333.9
(22) Date of filing: 23.11.2020
(51) Int. Cl.: C09D 175/02, B65D 65/42

(54) **PROTECTIVE COATING FOR CONTAINERS AND PACKAGING**

(71) Applicant: Soluciones Ecologicas Ambientales, S.L., 46014 Valencia (ES)
(72) Inventor: GONZALES ROMERO, Manuel, 46014 VALENCIA (ES); MORA GARCIA, José Luis, 46014 VALENCIA (ES)
(86) International application number: PCT/ES2020/070728
(87) International publication number: WO 2022/106733

(57) **Abstract**

PROTECTIVE COATING FOR CONTAINERS AND PACKAGING, APPLICABLE TO COVER THE SURFACE OF CONTAINERS AND OTHER TYPES OF PACKAGING, AS A MEANS OF PROTECTION TO PRESERVE THE PRODUCT THEY CONTAIN OR WITH WHICH THEY ARE TRANSPORTED, ESPECIALLY FOOD, AGAINST EFFECTS DUE TO MOISTURE OR OTHER ENVIRONMENTAL FACTORS, AS WELL AS BUMPS AND CHAFING, CONSISTING OF A LAYER OF POLYUREA 100% pure that waterproofs, seals and protects the container on all surfaces of the same on which it is applied, using different techniques, depending on the type of container or packaging in question in each case. The layer that constitutes the coating is a mixture of two liquid reactive components consisting of a component A, composed of disocyanates, and a component B, composed of amines.

## Description

### OBJECT OF THE INVENTION

The invention, as expressed in the statement of this specification, refers to a protective coating for containers and packaging that provides, to the function for which it is intended, advantages and characteristics, which are described in detail below, which represent an improvement d the current state of the art. More specifically, the object of the invention focuses on a synthetic polymer coating that, consisting of a layer of polyurea applied through different techniques, is especially useful for coating the surface of containers and other types of packaging, whatever the material, including those made from natural materials and more particularly those made with biopolymers such as lignin , since it is a very light material, acting as a means of protection to preserve the product they contain or with which they are transported, especially foodstuffs, against multiple effects, especially those due to moisture or other environmental factors, as well as golpes and chafing, as well as those containing or used to transport products, dangerous goods or substances, serving in such case as encapsulation of protection to avoid effects of the same on people or the environment.

### FIELD OF APPLICATION OF THE INVENTION

The field of application of the present invention is framed within the sector of industry dedicated to the manufacture and application of protective coatings.

### BACKGROUND OF THE INVENTION

As a reference to the current state of the art, although it is known the application of different types of protective coatings on certain types of substrates or products, at least by the applicant, it is unknown the existence of any that presenttechnical characteristics equal or like those specifically presented by the one claimed here.

### EXPLANATION OF THE INVENTION

The protective coating for containers and packaging that the invention represents an improvement over the coatings currently used, being the characterizing details that distinguish it conveniently collected in the final claims accompanying this description.

What the invention proposes, as noted above, is a synthetic polymeric coating which, consisting essentially of a layer of pure polyurea applied through different techniques, is especially useful for coating the surface of containers and other types of packaging, whatever the material, including Those manufactured from natural materials, acting as a means of protection to preserve the product they contain or with which they are transported, especially food, against multiple effects, especially those due to humidity or other environmental factors, as well as blows and chafing.

More specifically, the layer of protective coating proposed by the present invention is polymeric containers and packaging of high purity at 100% that waterproofs, seals, and protects the container on all surfaces of the same on which it is applied, for which different techniques will be used, depending on the type of container or packaging in question in each case.

As is known, polyurea isa synthetic polymer obtained from the reaction of a diamine with a disisocyanate, this polymerization reaction is very similar to that of polyurethane, but in the case of polyurea the resulting bond is of the "urea" type, which is why it is called polyurea.

In the case of the invention, pure poliurea does not contain solvents. The polyurea system is only reactivated when applied. It has a solidity in 100% (VOC's zero) resulting in being aninert metal.

Global migration test has been carried outaccording to COMMISSION REGULATION (EU) No 10/2011 of 14 January 2011, Standard EN 1186-3, simulant A (10% ethanol).

Andglobal migration test according to COMMISSION REGULATION (EU) No 10/2011 of 14, January 2011 Standards UNE EN 1186-1 and UNE EN 1186-3, simulant C (ethanol 20%).

100% pure polyurea is applied as a coating suitable for waterproofing, protection and sealing of packaging, in particular containers and other packaging intended for food use, and is formed from the mixture, through a dispenser, of two highly reactive components in liquid format, namely a component A composed of disocyanates and a component B composed of amines, and which, in turn, is applied on the surface of the container or packaging to form a solid membrane, completely continuous, without joints or overlaps, of high density, resistance, elasticity and excellent mechanical qualities.

Specifically, the application techniques can be the following:
- By hydraulic system:
   It may have different operating data storage capacity, as well as models for coatings with nominal pressure up to
   240 bar (3500 psi, 24.0 MPa).
- By means of heated hoses:
   It can have nominal pressures of 138 or 240 bar (2000 psi or 3500 psi, from 13.8 to 24.0 MPa) and diameter between 3/8 inch or 1/2 inch.
- By heated flexible hose:
   It can have nominal pressures of 138 or 240 bar (2000 psi or 3500 psi, from 13.8 to 24.0 MPa) and diameter of 1/4 inch or 3/8 inch.
- By gun:
   Air purging gun, mechanical or liquid with round or flat pattern.
- By pump:
   Supply pumps. Piston or diaphragm pumps for common products, with drum or wall mounting.
   Agitator kit, to shake the resin so that a uniform coating is achieved.

Logically, one or the other of the techniques will be applied, depending on the type of packaging in question.

For its part, the coating of the invention is especially applicable in containers and packaging of any kind, whatever the material, including those manufactured from natural materials and more particularly those made with biopolymers such as lignin, serving, on the one hand, as a means of protection to preserve the product they contain or with which they are transported, especially food, against external effects, especially those due to humidity or other environmental factors, as well as bumps and chafing, and on the other hand as a means of protection for containers and packaging due to its great resistance to impacts. S u useful life: it has a W3 certification (ETE 11/0357 and BBA 16/5340), of useful life 25 years, for a minimum thickness of 1.4 mm, which contain or serve to transport products, dangerous goods or chemically dangerous or polluting substances, serving in this case as a protective encapsulation to avoid effects of the same on people or the environment.

Thus, in this case, the coating is configured as a means of encapsulation of all types of containers of materials and packaging by coating them with the layer of the polymeric product serving as protection against the possible risk that all types of hazardous waste or pollutants may pose to the environment, such as, for example, uralite containers, steel drums, plastic, transport containers, jugs, buckets, containers for the transfer of goods and hazardous chemicals and hazardous and polluting waste, as well as for the safe storage of all types of containers.

With all this, and in any case, the main advantages and benefits provided by the coating object of the invention on the containers and packaging in which it is applied are:
- The temperature that allows to withstand without altrations, ranging from -40° to + 80 degrees. The containers and packaging, thanks to the coating of the invention, are immune to changes in extreme temperatures, both at low and high temperatures.
- Tear resistance. The invention of coating for polymeric containers and packaging, is a product of great surface hardness, elongability and resistance against wear.
- The invention of coating for polymeric containers and packaging, thanks to the coating have greater resistance to abrasion.
- The containers and packaging, thanks to the coating of the invention, have greater resistanceto abrasion.
- The containers and packaging, thanks to the coating of the invention, have a longer shelf life.
- The containers and packaging, thanks to the coating of the invention, are non-slip, preventing the products from slipping in the transport.
- The containers and packaging, thanks to the coating of the invention, are very easy to clean since they offerstability to waterproofing and sealingandness.
- The coating of the invention presents andxcelente adhesion on any surface.
- The containers and packaging, thanks to the coating of the invention, pass the migration tests according to regulation 10/2011 of 14 January on plastic materials and articles intended to meet food.
- The coating of the invention is adapted on the surface of containers and packaging of any geometry or irregular shape existing in a completely adhered way.
- The coating of the invention presentsinsensitivity to water and moisture.
- The coating of the invention is toplicable on any type of substrate.
- The containers and packaging, thanks to the coating of the invention, have a 100% VOC's zero, that is, theibre of organic compounds of chemical substances that contain carbon and are found in all living elements.
- The containers and packaging, thanks to the coating of the invention, are resistant to the climatic effects.
- The coating of the invention oroffers excellent protection against corrosion. Thereis adequate chemical resistance manifested in packaging, which does not swell or soften, which improves the mechanical properties of the functionality in general.
- The coating of the invention is exento solvents. It is free of substances harmful to the ozone layer, so they do not promote the greenhouse effect (it does NOT contain HFCs, HCFCs, VOCs, etc ...), VOC=0
- The coating of the invention is applicable in conditions of humidity of the support.

Sufficiently described the nature of the present invention, as well as the way to put it into practice, it is not considered necessary to make its explanation more extensive so that any expert in the art understands its scope and the advantages derived from it, stating that, within its essentiality, it may be put into practice in other forms of realization that differ in detail from that indicated by way of example, and to which the protection sought shall also be attained provided that its fundamental principle is not altered, changed or modified.

## Claims

1. - PROTECTIVE COATING FOR CONTAINERS AND PACKAGING that, applicable to cover the surface of containers and other types of packaging, as a means of protection to preserve the product they contain or with which they are transported, especially food, against effects due to moisture or other environmental factors, as well as bumps and chafing, and also for containers and packaging that contain or serve to transport products, goods or dangerous substances, serving in such case as a protective encapsulation to avoid effects of the same on people or on the environment, is **characterized by** consisting of a layer of 100% pure polyurea that waterproofs, seals and protects the container on all surfaces of the same on which it is applied, using different techniques depending on the type of container or packaging in question in each case.

2. PROTECTIVE COATING FOR CONTAINERS AND PACKAGING, ACCORDING TO CLAIM 1, **wherein** the layer of pure polyurea that constitutes the coating is a mixture of two liquid reactive components consisting of a component A, composed of disocyanates, and a component B, compound based on amines.
